# EUROPEAN PATENT SPECIFICATION

(11) **EP 1 854 688 B1**
(45) Date of publication and mention of the grant of the patent: **12.02.2014**
(21) Application number: 07009059.2
(22) Date of filing: 04.05.2007
(51) Int. Cl.: B60W 30/19, F16H 63/50, F02D 41/02, F16H 59/18

(54) **Straddle-type vehicle**
Grätschsitz-Fahrzeug
Véhicule de type chariot

(30) Priority: 09.05.2006 JP 2006130144
(43) Date of publication of application: 14.11.2007
(73) Proprietor: Yamaha Hatsudoki Kabushiki Kaisha, Shizuoka-ken Shizuoka 438-8501 (JP)
(72) Inventor: Someya, Akira c/o Yamaha Hatsudoki K. K., Iwata-shi Shizuoka-ken 438-8501 (JP); Noborio, Daichi c/o Yamaha Hatsudoki K. K., Iwata-shi Shizuoka-ken 438-8501 (JP)
(74) Representative: Grünecker, Kinkeldey, Stockmair & Schwanhäusser

(56) References cited:
- EP-A2- 0 269 942
- EP-A2- 0 424 883
- DE-A1-102005 040 870
- JP-A- 3 081 537

## Description

The present invention relates to a straddle-type vehicle such as a motorcycle. A straddle-type vehicle according to the preamble of claim 1 is known fromEP 0 424 883 A2

Straddle-type vehicles such as a motorcycle adopting a constant-mesh transmission are known in the related art. Such a constant-mesh transmission includes gears respectively provided to a main shaft and a drive shaft. In this constant-mesh transmission, a gear change is effected by selectively changing the combination of these gears through the operation of a change pedal.

In the constant-mesh transmission described above, driving force from the engine is transmitted from the main shaft via a clutch to be exerted on the drive shaft. Therefore, when a gear is to be changed, normally, the clutch is temporarily disengaged to release the driving force exerted on the drive shaft before performing a gear change.

However, an experienced driver or the like does not like the decrease in vehicle speed due to the releasing of the engine driving force exerted on the drive shaft, and desires to minimize the time during which the vehicle speed decreases. Accordingly, the driver often performs a shift change without performing clutch engaging/disengaging operation. That is, under a state in which the accelerator operation amount is large and the engine driving force is large, accelerator return and opening operations are performed in quick succession ("snapping" is performed). This allows a gear change to be performed while the engine driving force is reduced for only a short period of time. The aforementioned operation may be sometimes called as snapping.

A technique for smoothly effecting the above-mentioned shift change operation omitting engaging/disengaging operation is proposed in, for example, Patent Document 1. The straddle-type vehicle disclosed in the publication includes a throttle opening sensor that detects the opening of a throttle valve. Ignition retardation processing is performed at the timing at which a change in the opening of the throttle valve due to an accelerator operation is detected by the sensor, thereby reducing the engine driving force.

According to this technique, the engine driving force is reduced by the ignition retardation processing, thereby making it possible to reduce the operating force required for operating the change pedal and also reduce the shock at the time of gear change.
Patent Document 1: JP-A-Hei 03-81537

In recent years, straddle-type vehicles, equipped with an electronically-controlled throttle device having an accelerator operation amount detecting device that detects the accelerator operation amount, and a throttle driving actuator that drives the throttle valve so as to open and close, have started to appear on the market. In such a straddle-type vehicle, the throttle valve is driven so as to open and close by the actuator in accordance with the accelerator operation amount detected by the accelerator operation amount detecting device.

However, the following problems occur when an electronically-controlled throttle device is applied to the straddle-type vehicle that includes a throttle opening sensor and performs ignition retardation processing on the basis of the detection result of the sensor as described above. That is, the operating force required for operating the change pedal increases, and the shock at the time of gear change also increases, resulting in deterioration in shift feeling.

The present inventors conducted intensive studies on the cause of such deterioration in shift feeling, and found that this results from a delay in the starting time of ignition retardation processing. That is, in an electronically-controlled throttle device, a slight time lag occurs between the detection of the accelerator operation amount and the operation of the throttle valve based on this detection. Due to this time lag, it takes some time until ignition retardation processing is performed after snapping. Accordingly, the driver performs a shift pedal operation at erroneous timing, leading to deterioration in shift feeling. The present inventors conducted further intensive studies with a view to solving this problem, thus completing the present invention.

The present invention has been made in view of the above-mentioned problem, and accordingly it is an object of the present invention to provide a straddle-type vehicle that makes it possible to improve the shift feeling.

This objective is solved in an inventive manner by a straddle-type vehicle according to claim 1.

According to a preferred embodiment, the straddle-type vehicle further comprises an engine that generates driving force, a clutch having a driving portion and a driven portion, for switching between transmission/non-transmission of driving force of the engine through engagement/disengagement between the driving portion and the driven portion, a constant-mesh transmission coupled to a driven portion side of the clutch, and an accelerator operating member operated by a driver when changing driving force of the engine.

Preferably, the electronically controlled throttle device comprises the accelerator operation amount detecting device that detects an operation amount of the accelerator operating member, a throttle valve for adjusting an intake air amount of the engine, an actuator for driving the throttle valve, and a control device that performs drive control on the actuator in accordance with the operation amount detected by the accelerator operation amount detecting device.

According to another preferred embodiment, the straddle-type vehicle further comprises a decrease rate calculating device configured to calculate a decrease rate of the operation amount detected by the accelerator operation amount detecting device, wherein the snapping detecting device detects the snapping on the basis of the decrease rate calculated by the decrease rate calculating device.

Preferably, the decrease rate calculating device is configured to calculate the decrease rate a plurality of consecutive times, and the snapping detecting device is configured to determine that the snapping has been performed when the decrease rate has been equal to or larger than a predetermined value a predetermined number of consecutive times.

According to yet another preferred embodiment, the straddle-type vehicle further comprises an engine rotational speed detecting device configured to detect a rotational speed of the engine, and a clutch position detecting device configured to detect a clutch position of the clutch, wherein the snapping detecting device is configured to determine that the snapping has been performed when a rotational speed detected by the engine rotational speed detecting device is equal to or larger than a predetermined value, the operation amount detected by the accelerator operation amount detecting device is equal to or larger than a predetermined operation amount, and an engaged state of the clutch is detected by the clutch position detecting device.

Preferably, the predetermined operation amount is set for each transmission gear range of the transmission prior to shift change.

Further, preferably the magnitude of engine driving force to be reduced by the driving force reducing device is set for each transmission gear range of the transmission prior to shift change.

Still further, preferably the magnitude of engine driving force to be reduced by the driving force reducing device is set larger as a transmission gear range of the transmission prior to shift change becomes higher.

Yet further still, preferably the magnitude of engine driving force to be reduced by the driving force reducing device is set larger as a transmission gear range of the transmission prior to shift change becomes lower.

Preferably, a period of time for which engine driving force is reduced by the driving force reducing device is set for each transmission gear range of the transmission prior to shift change.

Further, preferably a period of time for which engine driving force is reduced by the driving force reducing device is set shorter as a transmission gear range of the transmission prior to shift change becomes higher.

Still further, preferably the driving force reducing device performs ignition retardation processing as processing for reducing driving force of the engine.

Yet further still, preferably the driving force reducing device performs processing of reducing a fuel injection amount as processing for reducing driving force of the engine.

Preferably, the driving force reducing device performs processing of reducing an intake air amount of the engine as processing for reducing driving force of the engine.

Further, preferably the straddle-type vehicle is a motorcycle.

In the following, the present invention is explained in greater detail with respect to several embodiments thereof in conjunction with the accompanying drawings, wherein:
- FIG. 1: is a side view of a motorcycle according to an embodiment,
- FIG. 2: is a structural diagram of the drive system of the motorcycle shown in FIG. 1,
- FIG. 3: is a perspective view showing transmission gears constituting a transmission,
- FIG. 4: is a block diagram showing the general configuration of a control system incorporated in the motorcycle,
- FIG. 5: is a block diagram showing a driving system device group,
- FIG. 6: is a block diagram showing a sensor/switch group,
- FIG. 7: is a flowchart showing driving force reducing processing,
- FIG. 8: is a diagram showing an operation amount threshold setting table,
- FIG. 9: is a diagram showing an ignition timing setting table,
- FIG. 10: is a diagram showing a duration setting table,
- FIG. 11: is a diagram showing an example of changes of the accelerator operation amount and ignition timing over time, and
- FIG. 12: is a diagram showing an example of changes of the accelerator operation amount and ignition timing over time.

### Description of Reference Numerals and Symbols:

10: motorcycle
11: body frame
16: seat
28: engine unit (engine)
41: handlebar
41 R: right grip (accelerator operating member)
42: accelerator input sensor (accelerator operation amount detecting device)
46: throttle valve
47: throttle
49: throttle driving actuator (actuator)
50: throttle opening sensor
51: electronically-controlled throttle device
53: engine rotational speed sensor (engine rotational speed detecting device)
54: clutch
54a: clutch housing (driving portion)
54b: clutch boss (driven portion)
55: main shaft
56: main-shaft rotational speed sensor
58: drive shaft
68: clutch position sensor (clutch position detecting device)
69: vehicle speed sensor
70: gear position sensor
80: transmission
90: microcomputer
100: ECU (control device)

Embodiments will now be described below with reference to the drawings.

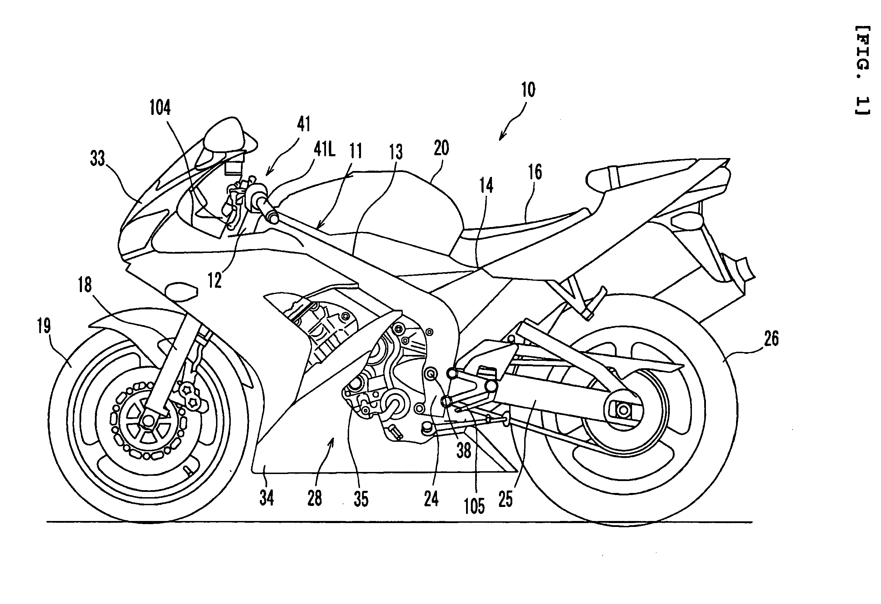

As shown in FIG. 1, a vehicle according to this embodiment is a motorcycle 10. The motorcycle 10 includes a body frame 11 constituting the framework of the motorcycle 10, and a seat 16 on which a driver sits. The driver sitting on the seat 16 rides the motorcycle while straddling the body frame 11. It should be noted that in the present teaching, the configuration of the vehicle is not limited to the one shown in FIG. 1, but the vehicle may be a so-called moped-type vehicle. Further, there are no particular limitations on the maximum speed and displacement of the vehicle, the size of the vehicle, and the like, either. Further, the vehicle is not limited to a motorcycle, but may be another kind of straddle-type vehicle such as a four-wheeled buggy.

In the following description, the front, rear, left, and right directions refer to the directions as seen from the driver sitting on the seat 16. The body frame 11 includes a steering head pipe 12, a main frame 13 extending diagonally downward to the rear from the steering head pipe 12, and left and right seat rails 14 extending diagonally upward to the rear from a midway portion of the main frame 13.

A front wheel 19 is supported on the steering head pipe 12 via a front fork 18. A fuel tank 20 and the seat 16 are supported on the seat rails 14. The seat 16 extends from the rear of the fuel tank 20 toward the rear end of the seat rails 14.

A pair of left and right rear arm brackets 24 are provided at the rear end of the main frame 13. It should be noted that in this case, the rear arm brackets 24 and the like provided to the main frame 13 constitute a part of the body frame 11.

The rear arm brackets 24 project downward from the rear end of the main frame 13. A pivot shaft 38 is provided to each of the rear arm brackets 24. The front end of a rear arm 25 is rockably supported on the pivot shaft 38. A rear wheel 26 is supported on the rear end of the rear arm 25.

Further, an engine unit 28 for driving the rear wheel 26 is supported on the body frame 11. A crankcase 35 is supported in place while being suspended from the main frame 13. It should be noted that while the engine unit 28 includes a gasoline engine (not shown) in this embodiment, the engine provided in the engine unit 28 is not limited to an internal combustion engine such as a gasoline engine, but may be a motor engine or the like. Further, the engine may be one combining an engine and a motor engine.

The motorcycle 10 includes a front cowl 33, and left and right leg shields 34. The leg shields 34 are cover members for covering the front side of the legs of the driver.

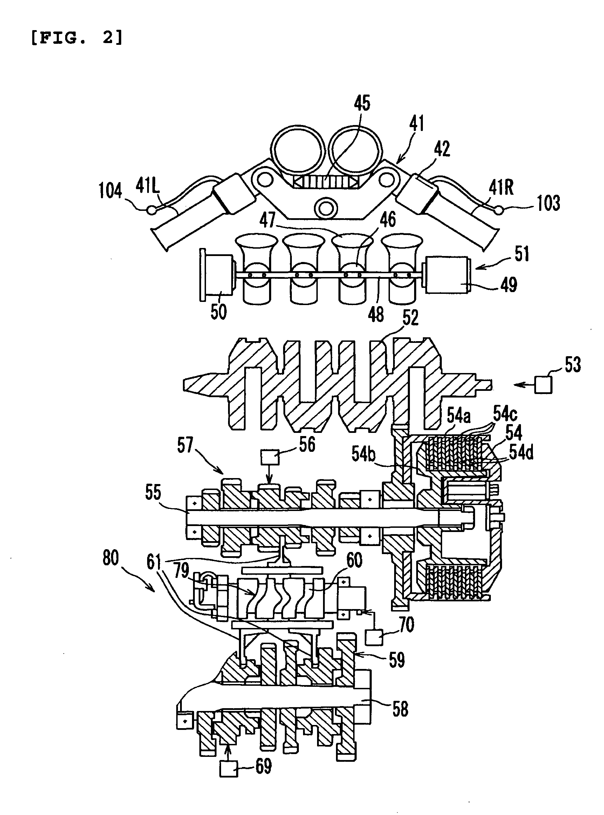

Further, although not shown in FIG. 1, a brake pedal is provided in a lower right-side portion of the motorcycle 10. The brake pedal is used for braking the rear wheel 26. Further, the front wheel 19 is braked by operating a brake lever 103 (see FIG. 2) provided near a right grip 41 R (see FIG. 2) of a handlebar 41. A clutch lever 104 is provided near a left grip 41 L of the handlebar 41. A clutch 54 (see FIG. 2) is engaged/disengaged by operating the clutch lever 104. Further, a change pedal 105 is provided in a lower left-side portion of the motorcycle 10. Gear change of a transmission 80 (see FIG. 2) is effected by operating the change pedal 105.

FIG. 2 is a structural diagram of the drive system of the motorcycle 10 shown in FIG. 1. The right grip 41 R of the handlebar 41 (see also FIG. 1) constitutes an accelerator grip. An accelerator input sensor 42 is mounted to the accelerator grip. The accelerator input sensor 42 corresponds to an accelerator operation amount detecting device according to the present teaching, and detects the amount of operation on the right grip 41 by the driver (hereinafter, referred to as the "accelerator operation amount"). Further, an indicator 45 that indicates the current gear position is provided at the center of the handlebar 41. It should be noted that in this embodiment, the shift position can be upshifted or downshifted between neutral and the sixth gear range that is the highest gear range by operating the change pedal 105 (see FIG. 1).

A throttle valve 46 is mounted to a throttle 47 constituting an intake passage. A throttle driving actuator 49 is provided at the right-side end of a valve shaft 48 of the throttle valve 46, and a throttle opening sensor 50 is provided at the left-side end thereof. The right grip 41 R, which serves as the accelerator grip, the throttle 47, the throttle driving actuator 49, and the throttle opening sensor 50 constitutes an electronically-controlled throttle device 51.

An engine rotational speed sensor 53 is provided on the right side of the right end of the crankshaft 52 of the engine unit 28 (see FIG. 1). The crankshaft 52 is connected to a main shaft 55 via the clutch 54 of a multi-plate wet type. The clutch 54 includes a clutch housing 54a and a clutch boss 54b. A plurality of friction plates 54c are attached to the clutch housing 54a. Further, a plurality of clutch plates 54d are attached to the clutch boss 54b. Each of the clutch plates 54d is arranged between adjacent friction plates 54c, 54c. By operating the clutch lever 104, the distance between the friction plates 54c and the clutch plates 54d changes, thereby effecting engagement/disengagement of the clutch 54. It should be noted that in the present teaching, the clutch 54 is not limited to a wet multi-plate type clutch. For example, the clutch 54 may be a dry clutch or a single plate type clutch. Multiple (six in FIG. 2) transmission gears 57 are mounted to the main shaft 55. A main-shaft rotational speed sensor 56 is also mounted to the main shaft 55. Each of the transmission gears 57 mounted to the main shaft 55 is in meshing engagement with each corresponding one of transmission gears 59 mounted on a drive shaft 58. The drive shaft 58 is arranged in parallel to the main shaft 55. It should be noted that in FIG. 2, the transmission gears 57 and the transmission gears 59 are depicted as being separated from each other for the convenience of description.

Except for the selected gears, one or both of the transmission gears 57 and 59 are mounted in an idling state with respect to the main shaft 55 or the drive shaft 58. Accordingly, transmission of driving force from the main shaft 55 to the drive shaft 58 is effected only via the pair of transmission gears being selected. It should be noted that a state where a pair of transmission gears 57 and 59 are in meshing engagement with each other in a state with driving force being transmitted from the main shaft 55 to the drive shaft 58 corresponds to a gear-in state.

The operation of performing a gear change through selection of the transmission gears 57 and transmission gears 59 is effected by a shift cam 79. The shift cam 79 has a plurality of (three in FIG. 2) cam grooves 60 formed therein. Shift forks 61 are fitted in the respective cam grooves 60. Each shift fork 61 is in engagement with predetermined transmission gears 57 and 59 of the main shaft 55 and drive shaft 58, respectively. As the shift cam 79 rotates, the shift forks 61 move in the axial direction along the cam grooves 60. Then, in synchronization with this movement of the shift forks 61, predetermined transmission gears 57 and 59 that are spline-fitted onto the main shaft 55 and the drive shaft 58 move in the axial direction. Then, the transmission gears 57 and 59 that have moved in the axial direction come into engagement with other transmission gears 57 and 59 that are mounted to the main shaft 55 and the drive shaft 58 in an idling state, thereby effecting a gear change. It should be noted that the transmission gears 57 and 59, and the shift cam 79 constitute the transmission 80.

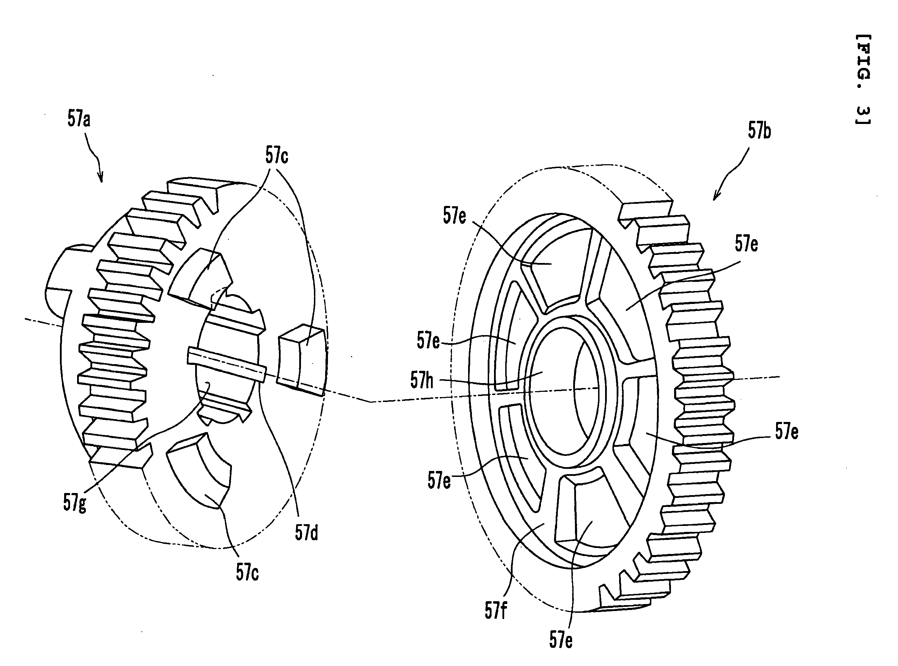

The transmission 80 is a constant-mesh transmission. As shown in FIG. 3, the transmission 80 includes, as the transmission gear 57, a first gear 57a and a second gear 57b. The first gear 57a has engaging protrusions 57c formed in its axial end surface. The second gear 57b has engaging recesses 57e formed in an axial end surface opposed to the engaging protrusions 57c of the first gear 57a. The transmission 80 includes a plurality of the first gears 57a and second gears 57b. While the transmission 80 includes, as the transmission gear 59, a plurality of the first gears in which the engaging protrusions are formed, and a plurality of the second gears in which the engaging recesses are formed, since these first and second gears are of the same construction as those of the first gear 57a and second gear 57b shown in FIG. 3, description thereof is omitted. Three engaging protrusions 57c are formed in the first gear 57a. The engaging protrusions 57c are arranged on the outer periphery on the axial end surface of the first gear 57a at equal circumferential intervals. Further, six engaging recesses 57e are formed in the second gear 57b. The engaging recesses 57e are also arranged at equal circumferential intervals.

Further, an insertion hole 57g through which the main shaft 55 and the drive shaft 58 are inserted is formed at the axial center of the first gear 57a. A plurality of grooves 57d are formed in the peripheral surface of the insertion hole 57g. The first gear 57a is spline-fitted onto the main shaft 55 and the drive shaft 58. On the other hand, although an insertion hole 57h through which the main shaft 55 and the drive shaft 58 are inserted is also formed in the second gear 57b, no groove is formed in the insertion hole 57h. The second gear 57b is thus mounted to the main shaft 55 and the drive shaft 58 in an idling state.

When performing a gear change, the change pedal 105 (see FIG. 1) is operated to rotate the shift cam 79 (see FIG. 2). As the shift cam 79 rotates, the shift forks 61 move along the cam grooves 60. In synchronization with this movement, the first gear 57a moves in the axial direction along the splines of the main shaft 55 and drive shaft 58. Further, the engaging protrusions 57c of the first gear 57a come into engagement with the engaging recesses 57e of the second gear 57b, so the combination of transmission gears 57 and 59 for transmitting driving force from the main shaft 55 to the drive shaft 58 is switched, thereby effecting a gear change.

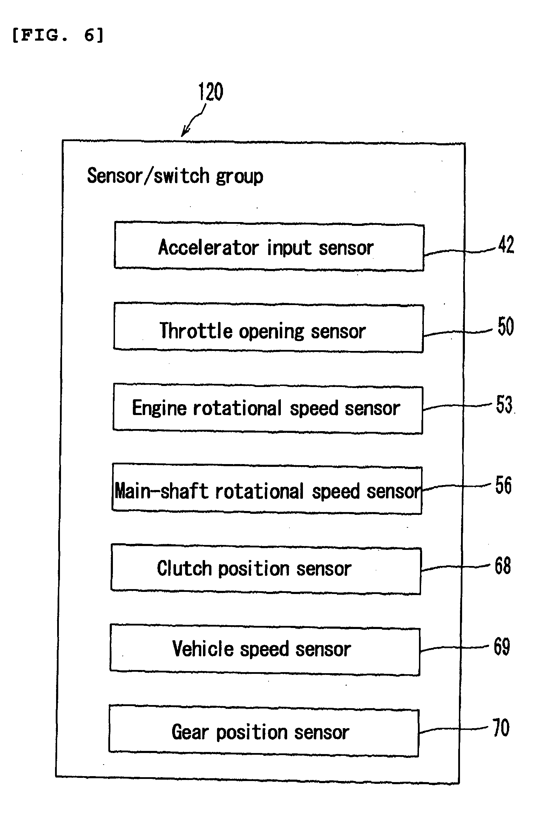

Installed in the transmission mechanism between the clutch lever 104 (see also FIG. 1) and the clutch 54 is a clutch position sensor 68 (see FIG. 6) for detecting the clutch position (the distance between the friction plates 54c and the clutch plates 54d). It should be noted that in this embodiment, the clutch position may be acquired on the basis of a clutch rotational speed difference. The clutch rotational speed difference refers to a difference between the rotational speed on the driving side and the rotational speed on the driven side of the clutch 54. The clutch rotational speed difference can be calculated on the basis of the detection result of the engine rotational speed sensor 53 and the detection result of the main-shaft rotational speed sensor 56.

A vehicle speed sensor 69 is mounted to the drive shaft 58. Further, a gear position sensor 70 for detecting the gear position (the rotation amount of the shift cam) is mounted to the shift cam 79.

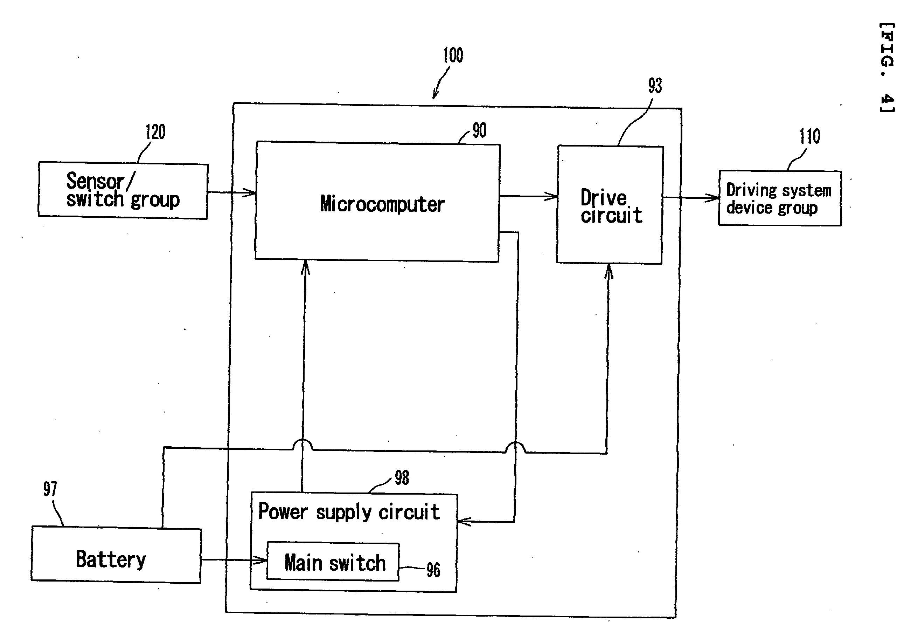

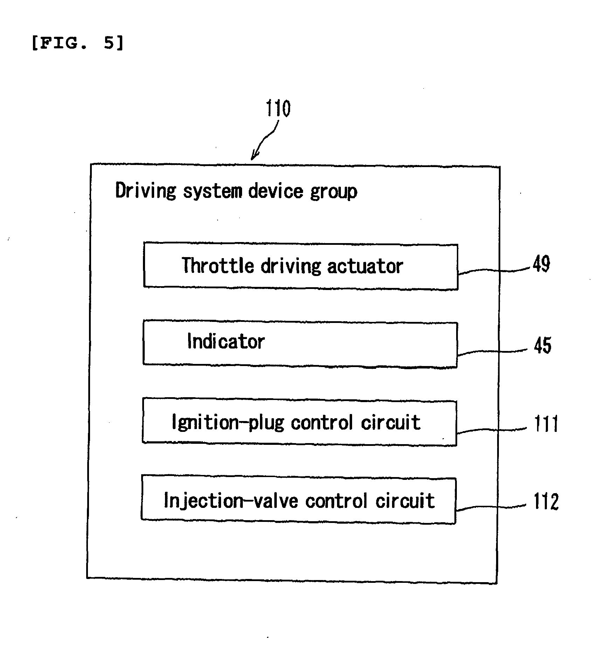

FIG. 4 is a block diagram showing the general configuration of a control system incorporated in the motorcycle 10. A driving system device group 110 is connected via a drive circuit 93 to a main microcomputer 90 equipped to an ECU 100. It should be noted that the ECU 100 corresponds to the control device according to the present teaching. As shown in FIG. 5, the driving system device group 110 includes the throttle driving actuator 49, the indicator 45 (see also FIG. 2), an ignition-plug control circuit 111, and an injection-valve control circuit 112. The ignition-plug control circuit 111 controls the ignition timing of an ignition plug (not shown). The injection-valve control circuit 112 controls the injection amount of a fuel injection valve (not shown).

In accordance with a drive signal supplied from the main microcomputer 90, the drive circuit 93 causes appropriate current to be supplied from a battery 97 to each of devices constituting the driving system device group 110. A sensor/switch group 120 is connected to the main microcomputer 90. As shown in FIG. 6, the sensor/switch group includes the accelerator input sensor 42, the throttle opening sensor 50, the engine rotational speed sensor 53, the main-shaft rotational speed sensor 56, the clutch position sensor 68, the vehicle speed sensor 69, and the gear position sensor 70 (see also FIG. 2). The detection results from the respective sensors 42, 50, 53, 56, 68, 69, and 70 are inputted to the main microcomputer 90. On the basis of the detection results inputted from the respective sensors mentioned above, the main microcomputer 90 supplies a drive signal to each of the devices constituting the driving system device group 110 to thereby control the drive of that device.

A power supply circuit 98 connected to the battery 97 includes a main switch 96 that is switched ON/OFF in synchronization with a key switch (not shown). When the main switch 96 is turned ON, the power supply circuit 98 converts the voltage of the battery 97 into a drive voltage for the microcomputer 90 for supply to the microcomputer 90.

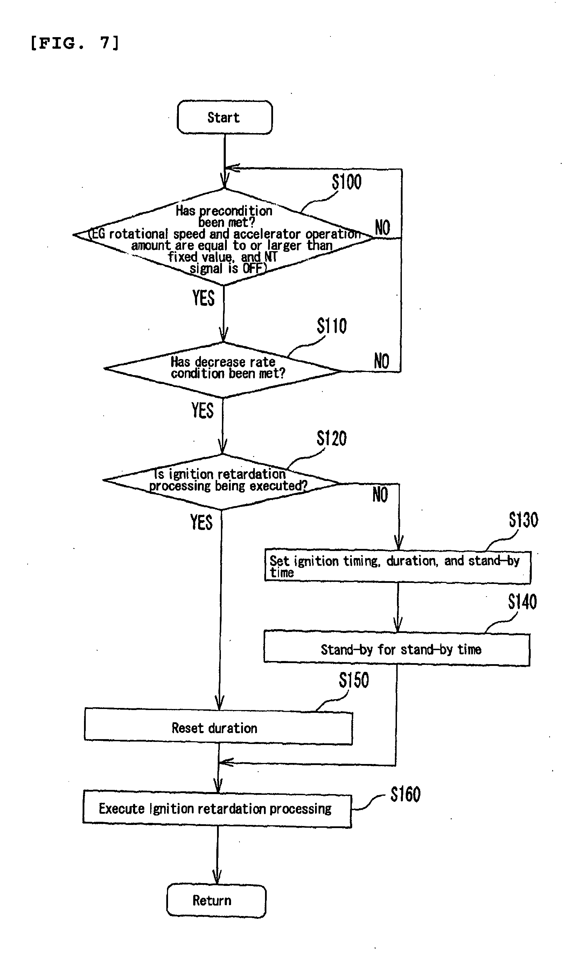

Next, driving force reducing processing in the motorcycle 10 will be described. FIG. 7 is a flowchart showing the driving force reducing processing. This driving force reducing processing is processing for reducing the engine driving force when snapping of the accelerator of the motorcycle 10 by the driver is detected. This driving force reducing processing is called up at predetermined timing from a previously executed main routine and executed.

First, in the step S100, the ECU 100 determines whether or not a precondition has been met. This precondition represents conditions related to the engine rotational speed (EG rotational speed), the accelerator operation amount, and a neutral signal (NT signal) indicating whether or not the clutch 54 is disengaged or engaged. The precondition represents a condition to be met for making a determination that snapping of the accelerator has been performed. Specifically, in the step S100, the ECU 100 makes a determination as to the following three conditions: whether or not the engine rotational speed is equal to or larger than a predetermined value N₁; whether or not the accelerator operation amount is equal to or larger than a predetermined value θ₁; and whether or not the neutral signal is OFF (whether or not the clutch 54 is engaged). The precondition is determined to have been met when all of the three conditions mentioned above are met. It should be noted that in this embodiment, the accelerator operation amount refers to the rotation angle of the right grip 41 R (see FIG. 2) serving as the accelerator grip.

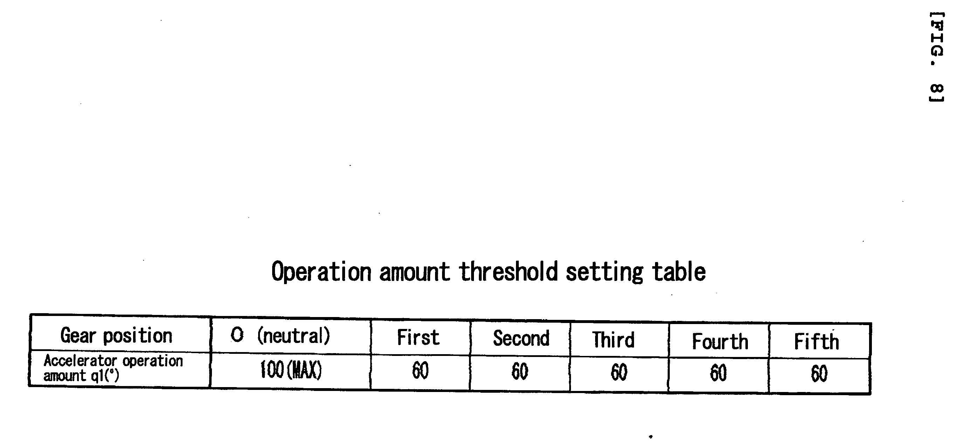

The predetermined value θ₁ of the accelerator operation amount described above is set on the basis of an operation amount threshold setting table shown in FIG. 8. As shown in FIG. 8, the predetermined value θ₁ is set on the basis of the current gear position. When the gear position is neutral, the predetermined value θ₁ is 100°, and when the gear position is between first and sixth gear, the predetermined value θ₁ is 60°. In this embodiment, the accelerator operation amount at the time when the accelerator is depressed to the fully open position is 85°. Accordingly, as a precondition, when the gear position is neutral, the accelerator operation amount does not exceed θ₁. Therefore, in the state where the gear position is neutral, ignition retardation processing that will be described later is not performed. It should be noted that the specific numerical value of θ₁ is not particularly limited, but can be set arbitrarily as appropriate.

If it is determined in the step S100 that the precondition has not been met, the processing is returned to step S100 and held in stand-by until the precondition is met. On the other hand, if it is determined that the precondition has been met, then, in the step S110, it is determined whether or not a decrease rate condition has been met.

In this embodiment, the determination as to whether or not the decrease rate condition has been met is effected by determining whether or not the following condition has been met. That is, it is determined whether or not a state during which the decrease rate v of the accelerator operation amount is equal to or larger than a predetermined value v₁ has continued for a predetermined period of time T₁. Specifically, the decrease rate v of the accelerator operation amount during each minute period of time (T₁/n) is calculated on the basis of the detection result of the accelerator input sensor 42, and it is determined whether or not the calculated decrease rate v has become equal to or larger than a predetermined value v₁ n consecutive times. It should be noted that in this embodiment, the predetermined period of time T₁ can be set to be within the range of, for example, 10 to 30 ms. If it is determined that the decrease rate v has become equal to or larger than the predetermined value v₁ n consecutive times, then the decrease rate condition is determined to have been met. It should be noted that the decrease rate v of the accelerator operation amount refers to a rate of change in the decreasing direction of the accelerator operation amount. Accordingly, the decrease rate v becomes a positive value during decrease of the accelerator operation amount (while the accelerator is being returned), and becomes a negative value during increase of the accelerator operation amount (while the accelerator is being opened). It should be noted that when executing the processing of steps S100 and S110 described above, the ECU 100 functions as a snapping detecting device. Further, in the step S110, when calculating the decrease rate v of the accelerator operation amount on the basis of the detection result of the accelerator input sensor 42, the ECU 100 functions as a decrease rate calculating device.

If it is determined in the step S110 that the decrease rate condition has not been met, the processing is returned to step S100. On the other hand, if it is determined that the decrease rate condition has been met, then, in the step S120, it is determined whether or not ignition retardation processing is being executed. In this processing, it is determined whether or not ignition retardation processing, which is carried out in the step S160 that will be described later, is being executed.

If it is determined in the step S120 that ignition retardation processing is not being executed, then, in the step S130, the processing of setting the ignition timing, duration, and stand-by time is carried out. The above-mentioned ignition timing refers to timing at which ignition is performed by an ignition plug (not shown) when performing ignition retardation processing. Further, the above-mentioned duration refers to a period of time for which ignition retardation processing is carried out through the processing of step S160 that will be described later. Further, the above-mentioned stand-by time refers to a period of time for which the processing is held in stand-by until the above-mentioned ignition retardation processing is started. It should be noted that in this embodiment, a fixed period of time is set as the above-mentioned stand-by time. This fixed period of time can be set within the range of, for example, 10 to 30 ms.

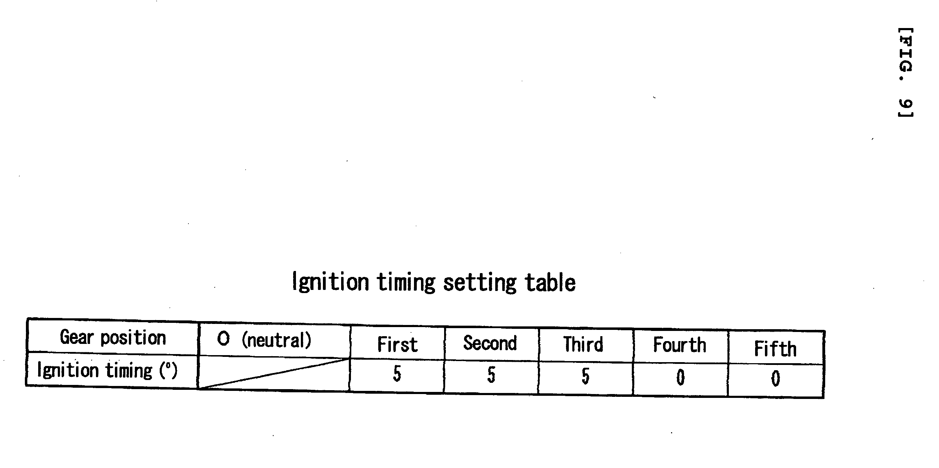

The above-mentioned ignition timing is set on the basis of an ignition timing setting table shown in FIG. 9. It should be noted that as for the ignition timing in this ignition timing setting table, with the top dead center taken as a reference (= 0°), a value on the advancing side with reference to the top dead center is represented as a positive value, and a value on the retarding side with reference to the top dead center is represented as a negative value. As shown in FIG. 9, the ignition timing is set on the basis of the current gear position. When the gear position is between the first and third gear, the ignition timing is set to 5°, and when the gear position is either the fourth or fifth gear, the ignition timing is set to 0°. It should be noted that the smaller the value set as the ignition timing, the larger the reduction in engine driving force due to ignition retardation processing that will be described later. Accordingly, as shown in FIG. 9, in this embodiment, the reduction in engine driving force is significantly larger when in a high gear position (fourth or fifth gear) as compared with when in a low gear position (first to third gear). It should be noted that in this embodiment, the ignition timing in the case where ignition retardation processing is not performed is set to reference timing (for example, a predetermined value within the range of 0 to 50° (angle toward the advancing side with reference to the top dead center); in this embodiment, 30°).

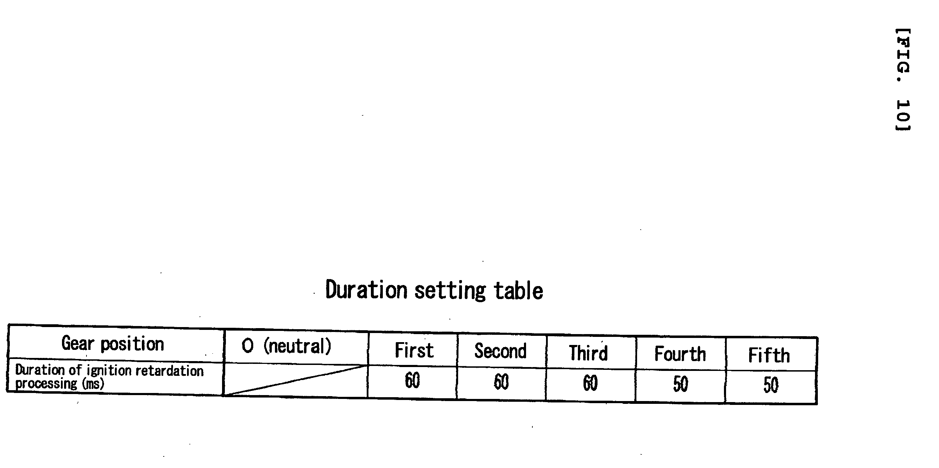

Further, the above-mentioned duration is set on the basis of a duration setting table shown in FIG. 10. As shown in FIG. 10, the duration of ignition retardation processing is set on the basis of the current gear position. When the gear position is between first and third gear, the duration is set to 60 (ms), and when the gear position is fourth or fifth gear, the duration is set to 50 (ms). Accordingly, when in a low gear position (first to third gear), ignition retardation processing is performed for a longer period of time as compared with when in a high gear position (fourth or fifth gear).

After the processing of step S130 is executed, then, in the step S140, the processing is held in stand-by for the stand-by time set in the step S130. Ignition retardation processing is not performed during this stand-by period. By performing ignition retardation processing after stand-by for the stand-by time, the stroke time corresponding to the amount of play of the change pedal 105 can be absorbed. As a result, a shift change can be accomplished with a natural feel.

If it is determined in the processing of step S120 described above that ignition retardation processing is being executed, then, in the step S150, the processing of resetting the duration is performed. In this processing, the ECU 100 resets the duration of ignition retardation processing on the basis of the duration setting table shown in FIG. 10. As described above, in this embodiment, when, during the execution of ignition retardation processing, it is determined that the precondition has been met in the processing of step S100, and that the decrease rate condition has been met in the processing of step S120, the duration is reset so that the period of time for which ignition retardation processing is executed is extended. In this way, according to this embodiment, the duration of ignition retardation processing is extended if snapping is performed again during ignition retardation processing. Accordingly, when snapping is performed again during ignition retardation processing, the series of processing from the cancellation of ignition retardation processing to the resumption of ignition retardation processing is not performed.

After the processing of step S150 is executed, then, ignition retardation processing is performed in the step S160. That is, the ECU 100 transmits a control signal to the ignition-plug control circuit 111 (see FIG. 5), and changes the ignition timing of the ignition plug so as to be retarded with respect to the reference timing (30°). The ignition timing retarding processing according to step S160 is performed on the basis of the ignition timing set in the step S130, and the duration set in the step S130 or step S150. After the processing of step S160 is executed, the driving force reducing processing is ended. It should be noted that when executing the above-mentioned processing of step S160, the ECU 100 and the ignition plug control circuit 111 each function as a driving force reducing device device.

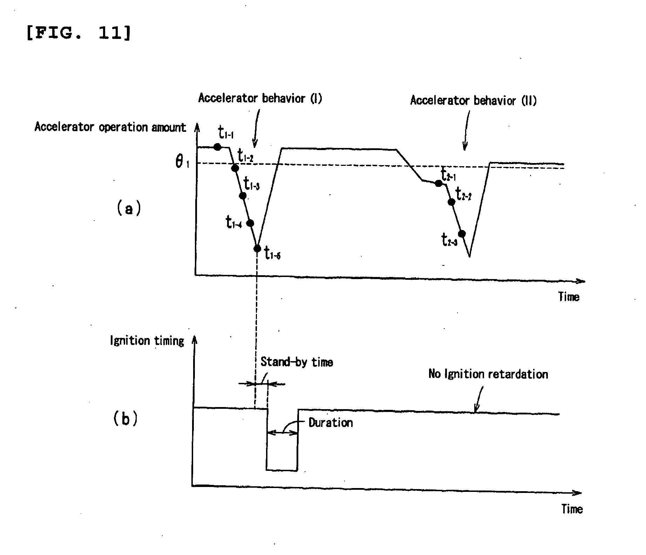

FIG. 11 is a diagram showing an example of changes of the accelerator operation amount and ignition timing over time. FIG. 11 (a) shows a change of accelerator operation amount over time, and FIG. 11 (b) shows a change of ignition timing over time. It should be noted that FIG. 11 illustrates a case where n = 3 in the step S110 of FIG. 7.

First, an accelerator behavior (I) on the left side of FIG. 11 (a) will be described. With respect to the accelerator behavior (I), at times t₁₋₂, t₁₋₃, and t₁₋₄, the decrease rate of acceleration operation amount has been equal to or larger than the predetermined value v₁ three consecutive times, so the decrease rate condition (see step S110 of FIG. 7) is satisfied. Further, at time t₁₋₁, the engine rotational speed is equal to or larger than the predetermined value N₁, the accelerator operation amount is equal to or larger than the predetermined value θ₁, and the clutch 54 is in engagement, so the precondition (see step S100 of FIG. 7) is satisfied. Accordingly, in the accelerator behavior (I), it is determined that snapping of the accelerator has been performed, so that, as shown in FIG. 11 (b), ignition retardation processing is performed. At this time, the stand-by time from the time t₁₋₄, at which it is determined that snapping has been performed, to the start of the ignition retardation processing, the ignition timing, and the duration of the ignition retardation processing are set in accordance with the processing of step S130 of FIG. 7.

At time t₁₋₅ after the elapse of a predetermined period of time from the time t₁₋₄, although the decrease rate condition is satisfied, the precondition is not satisfied because the accelerator operation amount is less than θ₁. Accordingly, no ignition retardation processing is performed after the time t₁₋₅.

Next, an accelerator behavior (II) on the right side of FIG. 11 (a) will be described. With respect to the accelerator behavior (II), the decrease rate of accelerator operation amount is large at times t₂₋₂ and t₂₋₃, so the decrease rate condition is satisfied. However, since the accelerator operation amount is less than θ₁ at time t₂₋₁ that precedes the time t₂₋₂, the above-mentioned precondition is not satisfied. Accordingly, no ignition retardation processing is performed in the accelerator behavior (II).

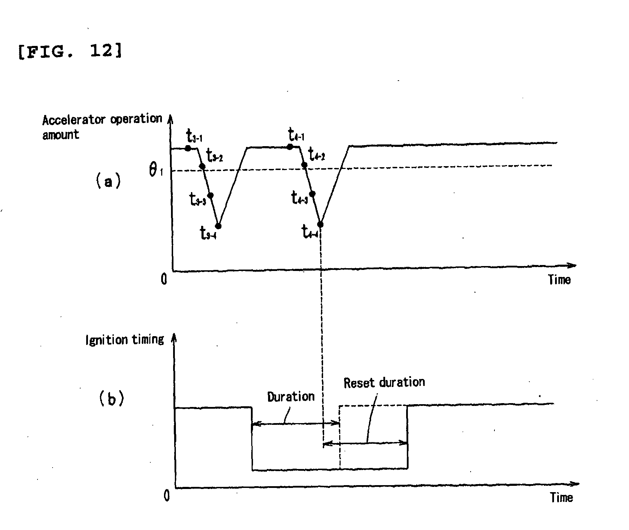

FIG. 12 is a diagram showing another example of changes of the accelerator operation amount and ignition timing over time. FIG. 12 illustrates a case where snapping is determined to have been performed again during the execution of ignition retardation processing. A case is considered in which it is determined that snapping has been performed again at time t₄₋₄ during the execution of ignition retardation processing. In this case, the duration of ignition retardation processing is reset (see step S150 of FIG. 7) when it is determined that the second snapping has been performed at the time t₄₋₄, and the ignition retardation processing is extended for the reset duration from the time t₄₋ 4. It should be noted that in FIG. 12(b), the execution time of ignition retardation processing in the case where the second snapping has not been performed is indicated by the broken line.

As described above, in the motorcycle 10 according to this embodiment, in response to the detection of snapping of the accelerator by the driver on the basis of the decrease rate of the accelerator operation amount, the engine driving force is reduced by ignition retardation processing. Accordingly, the start timing of ignition retardation processing can be set so that the ignition retardation processing quickly responds to snapping by the driver, thereby allowing the driver to operate the change pedal 105 at appropriate timing. As a result, it is possible to prevent a situation where the operating force required for operating the change pedal 105 becomes large, or the shock at the time of gear change becomes large due to deviation of the operating timing of the change pedal 105 from the timing at which the engine driving force is reduced. An improvement in shift feeling can be thus achieved. Further, since the driver can operate the change pedal 105 at appropriate timing, it is possible to prevent a large load from being exerted on the transmission gears 57 and 59, the shift forks 61, and the like at the time of gear change, thereby preventing degradation of the transmission gears 57 and 59, shift forks 61, and the like.

Further, the motorcycle 10 according to this embodiment can also be configured such that ignition retardation processing is executed even when slight snapping that actually provides little reduction in engine driving force is performed.

It should be noted that this embodiment may be configured such that the throttle opening does not change during the execution of the ignition retardation processing (step S160) in the driving force reducing processing shown in FIG. 7. That is, while the ignition retardation processing is being executed, the throttle driving actuator 49 is not driven even when an accelerator operation has been performed, thereby keeping the throttle opening. This makes it possible to prevent the engine driving force from changing due to a change in throttle opening during the execution of the ignition retardation processing.

Further, in the motorcycle 10 according to this embodiment, one of the conditions for determining that snapping has been performed is that the decrease rate v of the accelerator operation amount calculated for each minute period of time (T₁/n) has been equal to or larger than the predetermined value v₁ n consecutive times. An improvement can be thus achieved in terms of the reliability with which the return operation of the accelerator at the time of snapping is detected.

Further, in the motorcycle 10 according to this embodiment, one of the conditions for determining that snapping has been performed is that the precondition (see step S100 of FIG. 7) is satisfied, that is, the following set of conditions are satisfied: the engine rotational speed is equal to or larger than the predetermined value N₁; the accelerator operation amount is equal to or larger than the predetermined value θ₁; and the clutch 54 is in engagement. Since a shift change is generally performed under a state in which the engine rotational speed is high, the accelerator operation amount is large, and the clutch 54 is in engagement, by adopting the above-described three conditions, an improvement can be achieved in terms of the reliability with which snapping is determined.

Further, in the motorcycle 10 according to this embodiment, the ignition timing in the ignition retardation processing is set to a large value in the case where the transmission gear range prior to shift change is high (fourth or fifth gear). On the other hand, the ignition timing is set to a small value in the case where the transmission gear range prior to shift change is low (first to third gear). That is, in the case where the transmission gear range prior to shift change is high, the engine driving force to be reduced becomes large as compared with the case where the transmission gear range prior to shift change is low. Since the engine brake applied to the body of the motorcycle 10 becomes larger as the transmission gear range becomes lower, by setting the ignition timing in accordance with the transmission gear range in this way, an improvement in shift feeling can be achieved.

It should be noted that the present embodiment may be configured such that the engine driving force to be reduced becomes larger as the transmission gear range becomes lower. When the transmission gear range is low, the driving force applied to the transmission 80 becomes large, so the operating force required for operating the change pedal 105 also becomes large. Accordingly, by setting the amount of reduction in engine driving force to be large when the transmission gear range is low, the operating force required for operating the change pedal 105 can be reduced, thereby providing improved shift feeling.

In the motorcycle 10 according to this embodiment, the duration of the ignition retardation processing is set for each transmission gear range prior to shift change. Accordingly, it is possible to set the optimum duration for each transmission gear range by taking into account the rotational speed difference between the transmission gears 57 and 59, the configurations of the engaging protrusions 57c and engaging recesses 57e, and the like.

Further, in the motorcycle 10 according to this embodiment, the duration of the ignition retardation processing is set to be short in the case where the transmission gear range prior to shift change is high (in the case of the fourth or fifth gear), and set to be long in the case where the transmission gear range prior to shift change is low (in the case of the first to third gear). When the transmission gear range is low, the driving force applied to the transmission 80 becomes large, and the operating force required for operating the change pedal 105 also becomes large. Accordingly, by setting the duration of the ignition retardation processing to be long in the case when the transmission gear range is low, the operating force on the change pedal 105 can be reduced, thereby providing improved shift feeling.

While in this embodiment the description is directed to the case where ignition retardation processing is performed as the engine-driving-force reducing processing, the engine-driving-force reducing processing is not limited to this and various kinds of processing can be adopted as the engine-driving-force reducing processing.

For example, injection amount reducing processing may be performed as the above-mentioned engine-driving-force reducing processing. That is, a control signal may be transmitted to the injection-valve control circuit 112 to reduce the amount of fuel injection of a fuel injection valve (not shown). In this case, the ECU 100 and the injection-valve control circuit 112 each function as a driving force reducing device.

Further, an air amount reducing processing may be performed as the above-mentioned engine-driving-force reducing processing. For example, by transmitting a control signal to the throttle driving actuator 49 to adjust the opening of the throttle valve 47, the amount of intake air to the engine unit 28 may be reduced. In this case, the ECU 100 and the throttle driving actuator 49 each function as a driving force reducing device.

The description above discloses (amongst others) an embodiment of a straddle-type vehicle, which includes an engine that generates driving force; a clutch having a driving portion and a driven portion, for switching between transmission/non-transmission of driving force of the engine through engagement/disengagement between the driving portion and the driven portion; a constant-mesh transmission coupled to a driven portion side of the clutch; an accelerator operating member operated by a driver when changing driving force of the engine; an electronically-controlled throttle device having an accelerator operation amount detecting device that detects an operation amount of the accelerator operating member, a throttle valve for adjusting an intake air amount of the engine, an actuator for driving the throttle valve, and a control device that performs drive control on the actuator in accordance with the operation amount detected by the accelerator operation amount detecting device; a snapping detecting device that detects snapping of the accelerator operating member by the driver, which is performed when effecting a shift change operation of the transmission without performing engaging/disengaging operation of the clutch, on the basis of the operation amount detected by the accelerator operation amount detecting device; and a driving force reducing device that performs processing for reducing driving force of the engine in response to detection of the snapping by the snapping detecting device.

According to the straddle-type vehicle mentioned above, the processing for reducing the engine driving force is performed upon detecting the snapping of the accelerator by the driver by the accelerator operation amount detecting device. Since the engine-driving-force reducing processing can be thus made to quickly respond to the snapping by the driver, the driver can perform an operation relating to gear change at appropriate timing. As a result, it is possible to prevent a situation where the operating force required for operating the change pedal becomes large or the shock at the time of gear change becomes large, thereby making it possible to achieve an improvement in shift feeling.

According to the present embodiment, in a straddle-type vehicle including an electronically-controlled throttle device, it is possible to achieve an improvement in shift feeling.

As described above, the present teaching is advantageous for use in a straddle-type vehicle.

The description above, in particular, discloses in order to provide a straddle-type vehicle that makes it possible to improve the shift feeling, a motorcycle according to the present embodiment which is configured such that if the decrease rate of accelerator operation amount calculated on the basis of the detection result of an accelerator input sensor has been equal to or smaller than a predetermined value for a predetermined period of time, and other preconditions have been met, it is determined that snapping of the accelerator by the driver has been performed, and the engine driving force is reduced by ignition retardation processing after the elapse of a predetermined stand-by time after this determination.

Further, according to a first preferred aspect, there is disclosed an embodiment of a straddle-type vehicle comprising: an engine that generates driving force; a clutch having a driving portion and a driven portion, for switching between transmission/non-transmission of driving force of the engine through engagement/disengagement between the driving portion and the driven portion; a constant-mesh transmission coupled to a driven portion side of the clutch; an accelerator operating member operated by a driver when changing driving force of the engine; an electronically-controlled throttle device having: an accelerator operation amount detecting device that detects an operation amount of the accelerator operating member; a throttle valve for adjusting an intake air amount of the engine; an actuator for driving the throttle valve; and a control device that performs drive control on the actuator in accordance with the operation amount detected by the accelerator operation amount detecting device; a snapping detecting device that detects snapping of the accelerator operating member by the driver, which is performed when effecting a shift change operation of the transmission without performing engaging/disengaging operation of the clutch, on the basis of the operation amount detected by the accelerator operation amount detecting device; and a driving force reducing device that performs processing for reducing driving force of the engine in response to detection of the snapping by the snapping detecting device.

Further, according to a second preferred aspect, the straddle-type vehicle further comprises a decrease rate calculating device that calculates a decrease rate of the operation amount detected by the accelerator operation amount detecting device, wherein the snapping detecting device detects the snapping on the basis of the decrease rate calculated by the decrease rate calculating device.

Further, according to a third preferred aspect, the decrease rate calculating device calculates the decrease rate a plurality of consecutive times; and the snapping detecting device determines that the snapping has been performed when the decrease rate has been equal to or larger than a predetermined value a predetermined number of consecutive times.

Further, according to a fourth preferred aspect, the straddle-type vehicle further comprises: an engine rotational speed detecting device that detects a rotational speed of the engine; and a clutch position detecting device that detects a clutch position of the clutch, wherein the snapping detecting device determines that the snapping has been performed when a rotational speed detected by the engine rotational speed detecting device is equal to or larger than a predetermined value, the operation amount detected by the accelerator operation amount detecting device is equal to or larger than a predetermined operation amount, and an engaged state of the clutch is detected by the clutch position detecting device.

Further, according to a fifth preferred aspect, the predetermined operation amount is set for each transmission gear range of the transmission prior to shift change.

Further, according to a sixth preferred aspect, the magnitude of engine driving force to be reduced by the driving force reducing device is set for each transmission gear range of the transmission prior to shift change.

Further, according to a seventh preferred aspect, the magnitude of engine driving force to be reduced by the driving force reducing device is set larger as a transmission gear range of the transmission prior to shift change becomes higher.

Further, according to an eighth preferred aspect, the magnitude of engine driving force to be reduced by the driving force reducing device is set larger as a transmission gear range of the transmission prior to shift change becomes lower.

Further, according to a ninth preferred aspect, a period of time for which engine driving force is reduced by the driving force reducing device is set for each transmission gear range of the transmission prior to shift change.

Further, according to a tenth preferred aspect, a period of time for which engine driving force is reduced by the driving force reducing device is set shorter as a transmission gear range of the transmission prior to shift change becomes higher.

Further, according to an eleventh preferred aspect, the driving force reducing device performs ignition retardation processing as processing for reducing driving force of the engine.

Further, according to a twelfth preferred aspect, the driving force reducing device performs processing of reducing a fuel injection amount as processing for reducing driving force of the engine.

Further, according to a thirteenth preferred aspect, the driving force reducing device performs processing of reducing an intake air amount of the engine as processing for reducing driving force of the engine.

Further, according to a fourteenth preferred aspect, the straddle-type vehicle is a motorcycle.

## Claims

1. Straddle-type vehicle (10) comprising
an accelerator operating member (41 R) operated by a driver when changing driving force of the engine (28), and
a driving force reducing device (100, 111; 112; 49) configured to perform processing for reducing driving force of the engine (28),
**characterized in that**
the straddle-type vehicle (10) further comprises an electronically-controlled throttle device (51) having an accelerator operation amount detecting device (42) configured to detect an operation amount of the accelerator operating member (41 R), and
a snapping detecting device (100) configured to detect snapping of the accelerator operating member (41 R) by the driver, which is performed when effecting a shift change operation of a transmission (80) without performing engaging/disengaging operation of a clutch (54), on the basis of the operation amount detected by the accelerator operation amount detecting device (42),
wherein the driving force reducing device (100, 111; 112; 49) is configured to perform processing for reducing driving force of the engine (28) in response to detection of the snapping by the snapping detecting device (100).

2. Straddle-type vehicle (10) according to claim 1, further comprising an engine (28) that generates driving force,
a clutch (54) having a driving portion (54a) and a driven portion (54b), for switching between transmission/non-transmission of driving force of the engine (28) through engagement/disengagement between the driving portion (54a) and the driven portion (54b),
a constant-mesh transmission (80) coupled to a driven portion (54b) side of the clutch (54), and
an accelerator operating member (41 R) operated by a driver when changing driving force of the engine (28).

3. Straddle-type vehicle (10) according to claim 1 or 2, wherein the electronically controlled throttle device (51) comprises
the accelerator operation amount detecting device (42) that detects an operation amount of the accelerator operating member (41 R),
a throttle valve (46) for adjusting an intake air amount of the engine (28),
an actuator (49) for driving the throttle valve (46), and
a control device (100) that performs drive control on the actuator (49) in accordance with the operation amount detected by the accelerator operation amount detecting device (42).

4. Straddle-type vehicle (10) according to one of the claims 1 to 3, further comprising a decrease rate calculating device (100) configured to calculate a decrease rate of the operation amount detected by the accelerator operation amount detecting device (42),
wherein the snapping detecting device (100) detects the snapping on the basis of the decrease rate calculated by the decrease rate calculating device (100).

5. Straddle-type vehicle (10) according to claim 4, wherein the decrease rate calculating device (100) is configured to calculate the decrease rate a plurality of consecutive times, and the snapping detecting device (100) is configured to determine that the snapping has been performed when the decrease rate has been equal to or larger than a predetermined value a predetermined number of consecutive times.

6. Straddle-type vehicle (10) according to claim 5, further comprising an engine rotational speed detecting device (53) configured to detect a rotational speed of the engine (28), and a clutch position detecting device (68) configured to detect a clutch position of the clutch (54), wherein the snapping detecting device (100) is configured to determine that the snapping has been performed when a rotational speed detected by the engine rotational speed detecting device (53) is equal to or larger than a predetermined value, the operation amount detected by the accelerator operation amount detecting device (42) is equal to or larger than a predetermined operation amount, and an engaged state of the clutch (54) is detected by the clutch position detecting device (68).

7. Straddle-type vehicle (10) according to claim 6, wherein the predetermined operation amount is set for each transmission gear range of the transmission (80) prior to shift change.

8. Straddle-type vehicle (10) according to one of the claims 1 to 7, wherein the magnitude of engine driving force to be reduced by the driving force reducing device (100, 111; 112; 49) is set for each transmission gear range of the transmission (80) prior to shift change.

9. Straddle-type vehicle (10) according to claim 8, wherein the magnitude of engine driving force to be reduced by the driving force reducing device (100, 111; 112; 49) is set larger as a transmission gear range of the transmission (80) prior to shift change becomes higher.

10. Straddle-type vehicle (10) according to claim 8, wherein the magnitude of engine driving force to be reduced by the driving force reducing device (100, 111; 112; 49) is set larger as a transmission gear range of the transmission (80) prior to shift change becomes lower.

11. Straddle-type vehicle (10) according to one of the claims 1 to 10, wherein a period of time for which engine driving force is reduced by the driving force reducing device (100, 111; 112; 49) is set for each transmission gear range of the transmission (80) prior to shift change.

12. Straddle-type vehicle (10) according to claim 11, wherein a period of time for which engine driving force is reduced by the driving force reducing device (100, 111; 112; 49) is set shorter as a transmission gear range of the transmission (80) prior to shift change becomes higher.

13. Straddle-type vehicle (10) according to one of the claims 1 to 12, wherein the driving force reducing device (100, 111) performs ignition retardation processing as processing for reducing driving force of the engine (28).

14. Straddle-type vehicle (10) according to one of the claims 1 to 13, wherein the driving force reducing device (100, 112) performs processing of reducing a fuel injection amount as processing for reducing driving force of the engine (28).

15. Straddle-type vehicle (10) according to one of the claims 1 to 14, wherein the driving force reducing device (100, 49) performs processing of reducing an intake air amount of the engine (28) as processing for reducing driving force of the engine (28).

16. Straddle-type vehicle (10) according to one of the claims 1 to 15, wherein the straddle-type vehicle (10) is a motorcycle.

## Patentansprüche

1. Fahrzeug vom Spreizsitz- Typ, aufweisend:
ein Beschleunigungsbetätigungsteil (41 R), betätigt durch den Fahrer, wenn eine Antriebskraft der Brennkraftmaschine (28) verändert wird, und
eine Antriebskraftreduzierungsvorrichtung (100, 111; 112, 49), konfiguriert, die Arbeitsweise zum Reduzieren der Antriebskraft der Brennkraftmaschine (28) auszuführen,
**dadurch gekennzeichnet, dass**
das Fahrzeug vom Spreizsitz- Typ (10) außerdem eine elektronisch gesteuerte Drosselvorrichtung (51) mit einer Beschleunigerbetätigungsgröße- Erfassungsvorrichtung (42) aufweist, konfiguriert, eine Betätigungsgröße des Beschleunigungsbetätigungsteils (41 R) zu erfassen, und
eine Schnell- Gas- Betätigungs- ("Schnipsen") Erfassungsvorrichtung (100), konfiguriert, das "Schnipsen" des Beschleunigungsbetätigungsteils (41 R) durch den Fahrer zu erfassen, das ausgeführt wird, wenn ein Schaltveränderungsbetätigung eines Getriebes (80) ohne ein Ausführen einer In- Eingriff / Außer- Eingriff- Kommen- Betätigung einer Kupplung (54) ausgeführt wird, auf der Grundlage der Betätigungsgröße, erfasst durch die Beschleunigerbetätigungsgröße- Erfassungsvorrichtung (42),
wobei die Antriebskraftreduzierungsvorrichtung (100, 111; 112, 49) konfiguriert ist, das Verarbeiten zum Reduzieren einer Antriebskraft der Brennkraftmaschine (28) in Abhängigkeit von der Erfassung des "Schnipsens" durch die "Schnipsen"-Erfassungsvorrichtung (100) auszuführen.

2. Fahrzeug vom Spreizsitz- Typ (10) nach Anspruch 1, außerdem aufweisend eine Brennkraftmaschine (28), die eine Antriebskraft erzeugt,
eine Kupplung (54) mit einem Antriebsabschnitt (54a) und einem Abtriebsabschnitt (54b) zum Schalten zwischen Übertagung / Nicht- Übertagung der Antriebskraft der Brennkraftmaschine (28) durch In- Eingriff- Kommen / Außer- Eingriff- Kommen zwischen dem Antriebsabschnitt (54a) und dem Abtriebsabschnitt (54b),
ein Getriebe (80) mit Konstant- Kämmeingriff, gekuppelt mit einer Seite des Abtriebsabschnittes (54b) der Kupplung (54), und
ein Beschleuniger- Betätigungsteil (41 R), betätigt durch einen Fahrer, wenn dieser die Antriebskraft der Brennkraftmaschine (28) ändert.

3. Fahrzeug vom Spreizsitz- Typ (10) nach Anspruch 1 oder 2, wobei die elektronisch- gesteuerte Drosselvorrichtung (51) aufweist
die Beschleunigerbetätigungsgröße- Erfassungsvorrichtung (42), die eine Betätigungsgröße des Beschleunigungsbetätigungsteils (41 R) erfasst,
ein Drosselventil (46) zum Einstellen einer Einlassluftmange der Brennkraftmaschine (28),
einen Betätiger (49) zum Antreiben des Drosselventils (46), und
einen Steuerungsvorrichtung (100), die eine Antriebssteuerung an dem Betätiger (49) in Übereinstimmung mit der Betätigungsgröße, erfasst durch eine Beschleunigerbetätigungsgröße- Erfassungsvorrichtung (42), ausführt.

4. Fahrzeug vom Spreizsitz- Typ (10) nach einem der Ansprüche 1 bis 3, aufweisend
eine Verminderungsgeschwindigkeits- Berechnungsvorrichtung (100), konfiguriert, eine Verminderungsgeschwindigkeit der Betätigungsgröße, erfasst durch die Beschleunigerbetätigungsgröße- Erfassungsvorrichtung (42), zu berechnen, wobei die "Schnipsen"- Erfassungsvorrichtung (100) das "Schnipsen" erfasst auf der Grundlage der Verminderungsgeschwindigkeit, berechnet durch die Verminderungsgeschwindigkeits- Berechnungsvorrichtung (100).

5. Fahrzeug vom Spreizsitz- Typ (10) nach Anspruch 4, wobei die Verminderungsgeschwindigkeits- Berechnungsvorrichtung (100) konfiguriert ist, die Verminderungsgeschwindigkeit einer Mehrzahl von aufeinanderfolgenden Zeiten zu berechnen, und die "Schnipsen"- Erfassungsvorrichtung (100) konfiguriert ist, festzulegen, dass das "Schnipsen" ausgeführt worden ist, wenn die Verminderungsgeschwindigkeit gleich geworden zu oder größer als ein vorbestimmter Wert einer vorbestimmten Anzahl von aufeinanderfolgenden Zeiten geworden ist.

6. Fahrzeug vom Spreizsitz- Typ (10), außerdem aufweisend eine Motordrehzahl-Erfassungsvorrichtung (53), konfiguriert, eine Drehzahl der Brennkraftmaschine (28) zu erfassen, und eine Kupplungsposition- Erfassungsvorrichtung (68), konfiguriert, eine Kupplungsposition der Kupplung (54) zu erfassen, wobei die "Schnipsen"- Erfassungsvorrichtung (100) konfiguriert ist, zu bestimmen, dass das "Schnipsen" ausgeführt worden ist, wenn eine Drehzahl, erfasst durch die Motordrehzahl- Erfassungsvorrichtung (53), gleich zu oder größer als ein vorbestimmter Wert ist, wobei die Betätigungsgröße, erfasst durch die Beschleunigerbetätigungsgröße- Erfassungsvorrichtung (42), gleich zu oder größer als eine vorbestimmte Betätigungsgröße ist, und ein Eingriffszustand der Kupplung (54) durch die Kupplungsposition- Erfassungsvorrichtung (68) erfasst wird.

7. Fahrzeug vom Spreizsitz- Typ (10) nach Anspruch 6, wobei die vorbestimmte Betätigungsgröße für jeden Getriebegangbereich des Getriebes (80) vor der Schaltänderung festgelegt wird.

8. Fahrzeug vom Spreizsitz- Typ (10) nach einem der Ansprüche 1 bis 7, wobei die Größe der Motorantriebskraft, die durch die Antriebskraft- Reduzierungsvorrichtung (100, 111; 112; 49) reduziert wird, für jeden Getriebegangbereich des Getriebes (80) vor der Schaltänderung festgelegt wird.

9. Fahrzeug vom Spreizsitz- Typ (10) nach Anspruch 8, wobei die Größe der Motorantriebskraft, die durch die Antriebskraft- Reduzierungsvorrichtung (100, 111; 112; 49) reduziert wird, vor der Schaltänderung größer festgelegt wird, wenn ein Getriebegangbereich des Getriebes (80) höher wird.

10. Fahrzeug vom Spreizsitz- Typ (10) nach Anspruch 8, wobei die Größe der Motorantriebskraft, die durch die Antriebskraft- Reduzierungsvorrichtung (100, 111; 112; 49) reduziert wird, vor der Schaltänderung größer festgelegt wird, wenn ein Getriebegangbereich des Getriebes (80) niedriger wird.

11. Fahrzeug vom Spreizsitz- Typ (10) nach einem der Ansprüche 1 bis 10, wobei eine Zeitdauer, für die die Motorantriebskraft durch die Antriebskraft- Reduzierungsvorrichtung (100, 111; 112; 49) reduziert ist, für jeden Getriebegangbereich des Getriebes (80) vor der Schaltänderung festgelegt wird.

12. Fahrzeug vom Spreizsitz- Typ (10) nach Anspruch 11, wobei eine Zeitdauer, für die die Motorantriebskraft durch die Antriebskraft- Reduzierungsvorrichtung (100, 111; 112; 49) reduziert ist, vor der Schaltänderung kürzer festgelegt ist, wenn ein Getriebegangbereich des Getriebes (80) höher wird.

13. Fahrzeug vom Spreizsitz- Typ (10) nach einem der Ansprüche 1 bis 12, wobei die Antriebskraft- Reduzierungsvorrichtung (100, 111) eine Zündverzögerungsverarbeitung als Verarbeiten zum Reduzieren der Motorkraft der Brennkraftmaschine (28) ausführt.

14. Fahrzeug vom Spreizsitz- Typ (10) nach einem der Ansprüche 1 bis 13, wobei die Antriebskraft- Reduzierungsvorrichtung (100, 112) eine Reduzierungsverarbeitung einer Kraftstoffeinspritzmenge als Verarbeiten zum Reduzieren der Motorkraft der Brennkraftmaschine (28) ausführt.

15. Fahrzeug vom Spreizsitz- Typ (10) nach einem der Ansprüche 1 bis 14, wobei die Antriebskraft- Reduzierungsvorrichtung (100, 49) eine Reduzierungsverarbeitung einer Einlassluftmenge der Brennkraftmaschine (28) als Verarbeiten zum Reduzieren einer Antriebskraft der Brennkraftmaschine (28) ausführt.

16. Fahrzeug vom Spreizsitz- Typ (10) nach einem der Ansprüche 1 bis 15, wobei das Fahrzeug vom Spreizsitz- Typ (10) ein Motorrad ist.

## Revendications

1. Véhicule de type à enfourcher (10), comprenant un élément d'actionnement d'accélérateur (41R) actionné par un conducteur lors d'un changement de la force d'entraînement du moteur (28), et
un dispositif de réduction de force d'entraînement (100, 111 ; 112 ; 49) configuré pour mettre en oeuvre un processus de réduction de la force d'entraînement du moteur (28),
**caractérisé en ce que**
le véhicule de type à enfourcher (10) comprend en outre un dispositif d'étranglement à contrôle électronique (51) comportant un dispositif de détection de quantité d'actionnement de l'accélérateur (42) configuré pour détecter une quantité d'actionnement de l'élément d'actionnement d'accélérateur (41R), et un dispositif de détection de déclenchement (100) configuré pour détecter le déclenchement de l'élément d'actionnement d'accélérateur (41R) par le conducteur, qui est mis en oeuvre lorsqu'une opération de changement de vitesses d'une transmission (80) est effectuée sans mettre en oeuvre une opération d'engagement/désengagement d'un embrayage (54), sur base de la quantité d'actionnement détectée par le dispositif de détection de quantité d'actionnement de l'accélérateur (42),
dans lequel le dispositif de réduction de force d'entraînement (100, 111 ; 112 ; 49) est configuré pour mettre en oeuvre un processus de réduction de la force d'entraînement du moteur (28) en réponse à la détection du déclenchement par le dispositif de détection de déclenchement (100).

2. Véhicule de type à enfourcher (10) selon la revendication 1, comprenant en outre
un moteur (28) qui génère une force d'entraînement, un embrayage (54) comportant une partie d'entraînement (54a) et une partie entraînée (54b), pour commuter entre la transmission/non-transmission de la force d'entraînement du moteur (28) par engagement/désengagement entre la partie d'entraînement (54a) et la partie entraînée (54b),
une transmission à engrènement constant (80) couplée à un côté de partie entraînée (54b) de l'embrayage (54), et
un élément d'actionnement d'accélérateur (41R) actionné par un conducteur lors d'un changement de la force d'entraînement du moteur (28).

3. Véhicule de type à enfourcher (10) selon la revendication 1 ou 2, dans lequel le dispositif d'étranglement à contrôle électronique (51) comprend
le dispositif de détection de quantité d'actionnement de l'accélérateur (42) qui détecte une quantité d'actionnement de l'élément d'actionnement d'accélérateur (41R),
une vanne d'étranglement (46) pour ajuster une quantité d'air d'admission du moteur (28),
un actionneur (49) pour entraîner la vanne d'étranglement (46), et
un dispositif de commande (100) qui met en oeuvre un contrôle de commande de l'actionneur (49) conformément à la quantité d'actionnement détectée par le dispositif de détection de quantité d'actionnement de l'accélérateur (42).

4. Véhicule de type à enfourcher (10) selon l'une des revendications 1 à 3, comprenant en outre un dispositif de calcul du taux de diminution (100) configuré pour calculer un taux de diminution de la quantité d'actionnement détectée par le dispositif de détection de quantité d'actionnement de l'accélérateur (42),
dans lequel le dispositif de détection de déclenchement (100) détecte le déclenchement sur base du taux de diminution calculé par le dispositif de calcul du taux de diminution (100).

5. Véhicule de type à enfourcher (10) selon la revendication 4, dans lequel le dispositif de calcul du taux de diminution (100) est configuré pour calculer le taux de diminution une pluralité de fois consécutives, et le dispositif de détection de déclenchement (100) est configuré pour déterminer que le déclenchement a été effectué lorsque le taux de diminution a été supérieur ou égal à une valeur prédéterminée un nombre prédéterminé de fois consécutives.

6. Véhicule de type à enfourcher (10) selon la revendication 5, comprenant en outre un dispositif de détection de vitesse de rotation du moteur (53) configuré pour détecter une vitesse de rotation du moteur (28), et un dispositif de détection de position de l'embrayage (68) configuré pour détecter une position d'embrayage de l'embrayage (54), dans lequel le dispositif de détection de déclenchement (100) est configuré pour déterminer que le déclenchement a été mis en oeuvre lorsqu'une vitesse de rotation détectée par le dispositif de détection de vitesse de rotation du moteur (53) est supérieure ou égale à une valeur prédéterminée, la quantité d'actionnement détectée par le dispositif de détection de quantité d'actionnement de l'accélérateur (42) est supérieure ou égale à une quantité d'actionnement prédéterminée, et un état engagé de l'embrayage (54) est détecté par le dispositif de détection de position de l'embrayage (68).

7. Véhicule de type à enfourcher (10) selon la revendication 6, dans lequel la quantité d'actionnement prédéterminée est réglée pour chaque plage de vitesses de transmission de la transmission (80) avant un changement de vitesse.

8. Véhicule de type à enfourcher (10) selon l'une des revendications 1 à 7, dans lequel la grandeur de force d'entraînement du moteur à réduire par le dispositif de réduction de force d'entraînement (100, 111 ; 112 ; 49) est réglée pour chaque plage de vitesses de transmission de la transmission (80) avant un changement de vitesse.

9. Véhicule de type à enfourcher (10) selon la revendication 8, dans lequel la grandeur de force d'entraînement du moteur à réduire par le dispositif de réduction de force d'entraînement (100, 111 ; 112 ; 49) est réglée pour être plus grande lorsqu'une plage de vitesses de transmission de la transmission (80) avant un changement de vitesse devient plus grande.

10. Véhicule de type à enfourcher (10) selon la revendication 8, dans lequel la grandeur de force d'entraînement du moteur à réduire par le dispositif de réduction de force d'entraînement (100, 111 ; 112 ; 49) est réglée pour être plus grande lorsqu'une plage de vitesses de transmission de la transmission (80) avant un changement de vitesse devient plus petite.

11. Véhicule de type à enfourcher (10) selon l'une des revendications 1 à 10, dans lequel une période durant laquelle la force d'entraînement du moteur est réduite par le dispositif de réduction de force d'entraînement (100, 111 ; 112 ; 49) est réglée pour chaque plage de vitesses de transmission de la transmission (80) avant un changement de vitesse.

12. Véhicule de type à enfourcher (10) selon la revendication 11, dans lequel une période durant laquelle la force d'entraînement du moteur est réduite par le dispositif de réduction de force d'entraînement (100, 111 ; 112 ; 49) est réglée pour être plus courte lorsqu'une plage de vitesses de transmission de la transmission (80) avant un changement de vitesse devient plus grande.

13. Véhicule de type à enfourcher (10) selon l'une des revendications 1 à 12, dans lequel le dispositif de réduction de force d'entraînement (100, 111) met en oeuvre un processus de retard d'allumage comme processus de réduction de la force d'entraînement du moteur (28).

14. Véhicule de type à enfourcher (10) selon l'une des revendications 1 à 13, dans lequel le dispositif de réduction de force d'entraînement (100, 112) met en oeuvre un processus de réduction de la quantité d'injection de combustible comme processus de réduction de la force d'entraînement du moteur (28).

15. Véhicule de type à enfourcher (10) selon l'une des revendications 1 à 14, dans lequel le dispositif de réduction de force d'entraînement (100, 49) met en oeuvre un processus de réduction de la quantité d'air d'admission du moteur (28) comme processus de réduction de la force d'entraînement du moteur (28).

16. Véhicule de type à enfourcher (10) selon l'une des revendications 1 à 15, dans lequel le véhicule de type à enfourcher (10) est une motocyclette.
